# FASCICULE DE BREVET EUROPEEN

(11) **EP 0 908 963 B1**
(45) Date de publication et mention de la délivrance du brevet: **21.11.2001**
(21) Numéro de dépôt: 98402291.3
(22) Date de dépôt: 17.09.1998
(51) Int. Cl.: H01M 10/28, H01M 2/16

(54) **Accumulateur à électrolyte alcalin, notamment de type nickel-cadmium ou nickel-métal hydrurable**
Akkumulator mit alkalischem Elektrolyten, insbesondere des Typs Nickel-Cadmium oder Nickel/Metallhydrid
Alkaline electrolyte secondary battery, particularly of the type nickel-cadmium or nickel metal hydride

(30) Priorité: 07.10.1997 FR 9712510
(43) Date de publication de la demande: 14.04.1999
(73) Titulaire: ALCATEL, 75008 Paris (FR)
(72) Inventeur: Senyarich, Stéphane, 16600 Mornac (FR); Viaud, Patrick, 33000 Bordeaux (FR)
(74) Mandataire: Laroche, Danièle

(56) Documents cités:
- EP-A- 0 680 107
- WO-A-92/12545
- GB-A- 2 285 638
- PATENT ABSTRACTS OF JAPAN vol. 010, no. 005 (E-372), 10 janvier 1986 & JP 60 170159 A (MATSUSHITA DENKI SANGYO KK), 3 septembre 1985

## Description

La présente invention concerne un accumulateur à électrolyte alcalin, notamment du type Nickel-Cadmium (Ni-Cd) ou Nickel-Métal hydrurable (Ni-MH), et en particulier un séparateur pour un tel accumulateur.

Les accumulateurs Ni-Cd sont depuis très longtemps utilisés comme source d'énergie autonome. Ils sont connus pour posséder une bonne rétention de charge, c'est à dire que lorsqu'ils sont stockés à l'état chargé, leur capacité diminue lentement. La charge perdue par un accumulateur Ni-Cd complètement chargé est de l'ordre de 20% en 7 jours à 40°C.

Les appareils portables récents nécessitant des sources d'énergie autonome de plus en plus importante, un nouveau couple a été récemment développé. L'accumulateur Ni-MH possède une capacité volumique supérieure à celle de l'accumulateur Ni-Cd, ce qui signifie qu'un accumulateur de format donné aura une autonomie supérieure s'il contient un métal hydrurable plutôt qu'une électrode négative au cadmium. Par contre, l'accumulateur Ni-MH possède une forte autodécharge, ce qui représente un problème très pénalisant pour l'utilisateur. La charge perdue par un accumulateur Ni-MH stocké à l'état complètement chargé est environ deux fois plus importante que pour un accumulateur Ni-Cd, soit 40% en 7 jours à 40°C. Ce mauvais résultat est dû au fait que l'électrode MH une fois chargée possède un caractère réducteur supérieur à celui de l'électrode Cd.

L'autodécharge est généralement attribuée pour partie à des navettes azotées. D'une part l'ammoniac et les nitrites présents dans l'accumulateur s'oxydent en nitrates sur l'électrode positive chargée, ce qui a pour conséquence de la décharger. D'autre part les nitrates et les nitrites se réduisent en ammoniac sur l'électrode négative chargée, ce qui a pour conséquence de la décharger elle aussi. Ces réactions peuvent se dérouler plusieurs fois, puisque les espèces générées à l'électrode positive vont réagir sur l'électrode négative où elles se transforment en espèces capables de réagir avec l'électrode positive. C'est pourquoi on parle de navettes.

La réduction des nitrates et des nitrites en ammoniac se trouve accélérée sur une électrode MH. Si cette réaction est l'étape limitante de la cinétique de la navette azotée, ceci signifie que, dans un laps de temps donné, davantage de navettes pourront se produire dans un accumulateur Ni-MH. Cette hypothèse est généralement admise pour expliquer l'autodécharge importante des accumulateurs Ni-MH.

Afin de limiter l'influence des espèces azotées, il a été proposé dans la demande de brevet JP-A-07-135 019, de limiter la quantité d'impuretés azotées apportées par les différents constituants introduits dans un accumulateur Ni-MH. Néanmoins il est impossible de supprimer totalement les impuretés azotées, et la faible quantité restante entretient une autodécharge élevée. En effet les cinétiques de transformations des espèces azotées sur les électrodes chargées sont si rapides qu'il existe en permanence de l'ammoniac et des nitrites au sein de l'accumulateur Ni-MH.

Une autre proposition présentée dans l'art antérieur consiste à remplacer le séparateur en polyamide généralement utilisé, par un séparateur en polyoléfine stable chimiquement dans ce même milieu. En effet un séparateur en polyamide représente une source potentielle d'impuretés azotées du fait de sa détérioration dans l'électrolyte très alcalin utilisé dans les accumulateurs Ni-MH.

Mais un séparateur en polyoléfine présente des difficultés d'utilisation à cause de sa forte hydrophobie. Afin de le rendre hydrophile, il peut être oxydé par traitement de fluoration (voir EP-0 696 822), par décharge corona (voir JP-A-07 02 583) ou selon d'autres méthodes (voir JP-A-07 192 714), ou bien greffé par des monomères hydrophiles. On peut aussi introduire un agent mouillant dans l'électrolyte.

Parmi les séparateurs en polyoléfine, un séparateur en fibres de polyéthylène est stable chimiquement dans l'électrolyte utilisé, n'introduit pas d'espèces azotées supplémentaires au sein de l'accumulateur, mais est sans effet sur les navettes azotées dues aux impuretés apportées par les autres constituants de l'accumulateur.
L'utilisation d'un séparateur en polyéthylène ne permet donc pas de réduire sensiblement l'autodécharge des accumulateurs Ni-MH.

Une autre solution consiste à utiliser un séparateur composé d'un mélange de fibres exclusivement constituées de polypropylène, appelées fibres non liantes, et de fibres de polypropylène recouvertes d'une gaine en polyéthylène, appelées fibres liantes. Lors de la fabrication d'un tel séparateur, la fusion du polyéthylène (dont la température de fusion est inférieure à la température de fusion du polypropylène) permet aux fibres gainées de s'accoler aux fibres non gainées. Lorsqu'il est greffé par certaines espèces hydrophiles (voir JP-A-06 196 141). Ce séparateur est capable de fixer une certaine quantité d'ammoniac et donc de limiter la quantité d'impuretés alimentant les navettes azotées. Néanmoins la quantité d'ammoniac qui peut être fixée par un tel séparateur est inférieure à la quantité d'espèces azotées présentes dans l'accumulateur.

La meilleure solution pour réduire l'autodécharge des accumulateurs Ni-MH est d'utiliser un séparateur exclusivement constitué de polypropylène qui est capable de fixer davantage d'ammoniac qu'un séparateur constitué d'un mélange de polypropylène et de polyéthylène. Il peut ainsi bloquer sous forme d'ammoniac l'ensemble des impuretés azotées présentes dans l'accumulateur et introduites par les constituants utilisés. Les navettes azotées sont donc complètement supprimées ainsi que l'autodécharge qui leur est associée.

Deux procédés de fabrication d'un séparateur exclusivement constitué de polypropylène sont connus à ce jour (voir en particulier Encyclopedia of Polymer Science and Engineering, 10, 219-23 (1985)).

D'une part il s'agit du procédé par soufflage pulsé de matière fondue, dit "melt-blow", qui consiste à déposer sur une surface plane le polymère en fusion qui est expulsé par saccades. Les fibres obtenues sont courtes et disposées de manière aléatoire. En se refroidissant elles adhèrent les unes aux autres. Ce procédé a l'inconvénient de produire un séparateur très fragile mécaniquement, très sensible au déchirement et qu'il est impossible de spiraler lorsque l'on souhaite réaliser un accumulateur cylindrique.

II s'agit d'autre part du procédé par filage d'une fibre continue, dit "spun-bond", qui diffère du précédent en ce que le polymère fondu est expulsé de manière continue à travers une filière. On obtient des fibres très longues et de fort diamètre. Ce procédé conduit à un séparateur qui offre de bonnes propriétés mécaniques mais possède l'inconvénient d'être peu homogène et donc très vulnérable aux courts-circuits.

La présente invention a pour but de proposer un accumulateur spiralé à électrolyte alcalin comportant un séparateur qui possède simultanément l'aptitude à réduire l'autodécharge et une bonne résistance mécanique.

L'objet de la présente invention est un accumulateur spiralé à électrolyte alcalin, notamment du type Nickel-Cadmium ou Nickel-Métal hydrurable, comprenant au moins une électrode positive et une électrode négative placées de part et d'autre d'un séparateur non-tissé constitué de fibres exclusivement en polypropylène, caractérisé par le fait que ledit séparateur comprend une première et une seconde couches superposées, ladite première couche étant obtenue par le procédé de filage dit "spun-bond" servant de support, et ladite seconde couche étant obtenue par aiguilletage de fibres sur ladite première couche, l'aiguilletage ayant entrelacé entre elles les fibres de la seconde couche et les ayant liées à celles de ladite première couche.

De préférence les fibres des deux couches présentent les paramètres suivants : les fibres de ladite première couche ont un diamètre compris entre 10 et 20 µm et celles de ladite seconde couche un diamètre compris entre 2 et 15 µm ; les fibres de ladite seconde couche ont une longueur comprise entre 5 mm et 40 mm.

Selon un mode de réalisation préféré, la masse surfacique de ladite première couche et celle de ladite seconde couche sont comprises entre 15 et 80 g/m². La masse surfacique dudit séparateur est comprise entre 30 et 100 g/m².

L'épaisseur dudit séparateur est comprise entre 80 µm et 400 µm, l'épaisseur de ladite première couche étant comprise entre 20 et 80 % de l'épaisseur de ce séparateur.

Ledit séparateur est greffé par un monomère vinylique choisi de préférence parmi l'acide acrylique et l'acide métacrylique.

D'autres caractéristiques et avantages de la présente invention apparaîtront au cours de la description suivante de modes de réalisation donnés à titre illustratif mais non limitatif. Dans le dessin annexé :
- la figure 1 est une vue schématique en perspective arrachée d'un accumulateur alcalin du type de celui de l'invention,
- la figure 2 est une vue schématique en coupe d'un exemple de séparateur selon l'invention.

### Exemple 1:

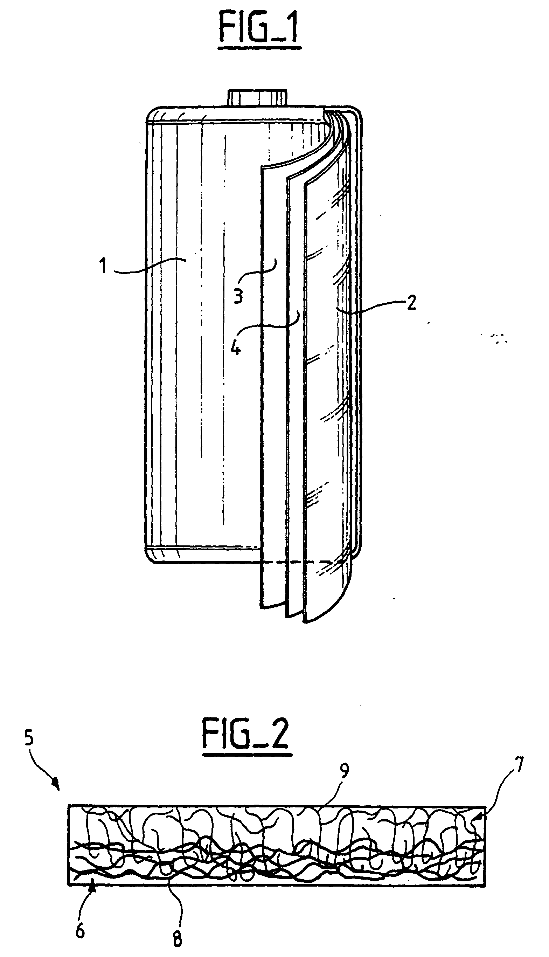

On construit un accumulateur spiralé 1 de type Ni-Cd, visible dans la figure 1, constitué d'une électrode positive 3 dont la matière active est de l'hydroxyde de nickel et d'une électrode négative 2 dont la matière active est de l'hydroxyde de cadmium. Ces deux électrodes sont séparées par un séparateur 4 en polyamide. L'ensemble est spiralé dans un godet de format AA et rempli d'un électrolyte composé d'un mélange d'hydroxyde de potassium, d'hydroxyde de sodium et d'hydroxyde de lithium.
Un tel accumulateur est chargé puis déchargé à deux reprises. Après la troisième charge, il est stocké à potentiel libre 7 jours à 40°C. Après retour à la température ambiante, il est complètement déchargé à un régime de C/5 afin de déterminer sa capacité résiduelle. On définit la perte de capacité comme la différence entre la capacité déchargée obtenue lors de la seconde décharge et la capacité déchargée obtenus après le repos de 7 jours à 40°C et divisée par la capacité déchargée obtenue lors de la seconde décharge. Dans le cas du présent accumulateur, la perte de capacité est de 23 %.

### Exemple 2 :

On construit un accumulateur de type Ni-MH identique à l'accumulateur de l'exemple 1 sauf en ce qui concerne l'électrode négative de cadmium remplacée par une électrode en alliage hydrurable classique.
Un tel accumulateur est chargé puis déchargé à deux reprises. Après la troisième charge, il est stocké à potentiel libre 7 jours à 40°C. Après retour à la température ambiante, il est complètement déchargé à un régime de C/5 afin de déterminer sa capacité résiduelle. On définit la perte de capacité de la même façon que dans l'exemple 1. Dans le cas du présent accumulateur, la perte de capacité est de 46 %.

### Exemple 3 :

On construit un accumulateur de type Ni-MH comme décrit dans l'exemple 2. Mais le séparateur 4 en polyamide est remplacé par un séparateur en fibres de polyéthylène fine rendues hydrophiles par un traitement d'oxydation qui peut être une décharge corona ou un traitement de fluoration sous atmosphère d'oxygène. L'autodécharge de cet accumulateur est testée comme décrit dans l'exemple 2.
Dans le cas du présent accumulateur, la perte de capacité est de 45 %.

### Exemple 4 :

On construit un accumulateur de type Ni-MH comme décrit dans l'exemple 2. Mais le séparateur 4 en polyamide est remplacé par un séparateur en polyoléfine, constitué d'un mélange de fibres de polyéthylène et de polypropylène, et rendu hydrophile par greffage d'acide acrylique. L'autodécharge de cet accumulateur est testée comme décrit dans l'exemple 2.
Dans le cas du présent accumulateur, la perte de capacité est de 48 %. Un résultat identique est obtenu si le greffage est effectué avec l'acide métacrylique.

### Exemple 5 selon l'invention :

On construit un accumulateur de type Ni-Cd comme décrit dans l'exemple 1. Mais le séparateur 4 en polyamide est remplacé par un séparateur selon l'invention," visible en coupe schématique dans la figure 2.

Ce séparateur 5 comprend une première couche 6 de fibres 8 de polypropylène de diamètre moyen 15 µm réalisée par le procédé "spun bond", et une seconde couche 7 de fibres 9 de polypropylène de diamètre moyen 10 µm et de longueur moyenne 30 mm, réalisée par le procédé d'aiguilletage à l'aide d'aiguilles traditionnelle ou par aiguilles d'eau. Un tel procédé est décrit notamment dans l'article paru dans International Nonwovens Bulletin 1/90 (21. Internationales Kolloquium über Nonwovens, Brno, 8-10 November 1989) ; "Neue Maschinenentwicklungen für Spunlaced Nonwovens Produkte" - pages 1-8.

Ce procédé permet d'entrelacer les fibres 9 de la seconde couche 7 et de les introduire partiellement dans la première couche 6 de manière à les solidariser à celle-ci. La figure 2 (qui n'est pas à l'échelle) montre très schématiquement cette solidarisation.

L'épaisseur globale du séparateur 5 est de 150 µm, dont 40 % environ correspond à l'épaisseur de la première couche.

Le séparateur est greffé par de l'acide acrylique. Pour cela il est imprégné d'une solution aqueuse contenant de l'acide acrylique et un photoamorceur, agent destiné à accroître la sensibilité du polymère aux rayons ultra-violet ; puis il est soumis au rayonnement ultra-violet, rincé à l'eau désionisée et séché.

On soumet l'accumulateur au même test que dans l'exemple 1 et la perte de capacité mesurée n'est plus que de 18 %.

Le greffage peut être effectué avec l'acide métacrylique et l'on obtient le même résultat.

### Exemple 6 selon l'invention

On construit un accumulateur de type Ni-MH comme décrit dans l'exemple 2, en remplaçant le séparateur 4 en polyamide par le séparateur 5 selon l'invention décrit dans l'exemple 5.
On soumet l'accumulateur au même test que dans l'exemple 2, et la perte de capacité mesurée n'est plus que de 22 %.

Afin de mieux mettre en évidence le progrès technique apporté par l'invention, les résultats des exemples 1 à 6 sont reportés dans le tableau 1 suivant. (PA = polyamide ; PE = polyéthylène ; PP = polypropylène ; AA = acide acrylique ; MA = acide métacrylique).

**Tableau 1**

| Exemple | 1 | 2 | 3 | 4 | 5 | 6 |
|---|---|---|---|---|---|---|
| Type d'accumulateur | Ni-Cd | Ni-MH | Ni-MH | Ni-MH | Ni-Cd | Ni-MH |
| Séparateur | PA | PA | PE oxydé | PP+PE greffé AA ou MA | PP greffé AA ou MA | PP greffé AA ou MA |
| Perte de capacité 7 j à 40°C | 23 % | 46 % | 45 % | 48 % | 18 % | 22 % |

Par ailleurs un séparateur selon l'invention conserve les bonnes propriétés mécaniques des séparateurs connus de type "spun bond", tout en étant beaucoup moins vulnérable aux courts-circuits.

Bien entendu l'invention n'est pas limitée aux deux modes de réalisation qui viennent d'être décrits. On pourra, sans sortir du cadre de l'invention, remplacer tout moyen par un moyen équivalent. En particulier les séparateurs de l'invention s'appliquent aussi bien aux accumulateurs parallélépipédiques qu'aux accumulateurs spiralés.

## Revendications

1. Accumulateur spiralé à électrolyte alcalin, notamment du type Nickel-Cadmium ou Nickel-Métal hydrurable, comprenant au moins une électrode positive et une électrode négative placées de part et d'autre d'un séparateur non-tissé constitué de fibres exclusivement en polypropylène, **caractérisé par le fait que** ledit séparateur comprend une première et une seconde couches superposées, ladite première couche étant obtenue par le procédé de filage dit "spun-bond" servant de support, et ladite seconde couche étant obtenue par aiguilletage de fibres sur ladite première couche, l'aiguilletage ayant entrelacé entre elles les fibres de la seconde couche et les ayant liées à celles de ladite première couche.

2. Accumulateur selon la revendication 1, **caractérisé par le fait que** les fibres de ladite première couche ont un diamètre compris entre 10 et 20 µm et celles de ladite seconde couche un diamètre compris entre 2 et 15 µm.

3. Accumulateur selon la revendication 2, **caractérisé par le fait que** les fibres de ladite seconde couche ont une longueur comprise entre 5 mm et 40 mm.

4. Accumulateur selon l'une des revendications 1 à 3, **caractérisé par le fait que** la masse surfacique de ladite première couche et celle de ladite seconde couche sont comprises entre 15 et 80 g/m².

5. Accumulateur selon l'une des revendications 1 à 4, **caractérisé par le fait que** la masse surfacique dudit séparateur est comprise entre 30 et 100 g/m².

6. Accumulateur selon l'une des revendications 1 à 5, **caractérisé par le fait que** l'épaisseur dudit séparateur est comprise entre 80 µm et 400 µm, l'épaisseur de ladite première couche étant comprise entre 20 à 80 % de l'épaisseur de ce séparateur.

7. Accumulateur selon l'une des revendications précédentes, **caractérisé par le fait que** ledit séparateur est greffé par un monomère vinylique.

8. Accumulateur selon la revendication 7, **caractérisé par le fait que** ledit monomère vinylique est choisi parmi l'acide acrylique et l'acide métacrylique.

## Patentansprüche

1. Spiralgewickelter Akkumulator mit alkalischem Elektrolyten, insbesondere vom Typ Nickel-Kadmium oder Nickel-Metallhydrid, mit wenigstens einer positiven Elektrode und einer negativen-Elektrode, die sich beiderseits eines nichtgewebten Separators befinden, der ausschließlich aus Polypropylenfasern gebildet ist,
**dadurch gekennzeichnet, dass** der Separator eine erste und eine zweite übereinanderliegende Lage aufweist, wobei die durch das "spun-bond" genannte Spinnverfahren gewonnene erste Lage als Träger dient, und die zweite Lage durch Nadelung der Fasern auf die erste Lage gewonnen wird, wobei bei der Nadelung die Fasern der zweiten Lage miteinander verwoben und diese mit denen der ersten Lage verknüpft werden.

2. Akkumulator nach Anspruch 1,
**dadurch gekennzeichnet, dass** die Fasern der ersten Lage einen Durchmesser zwischen 10 und 20 um und die der zweiten Lage einen Durchmesser zwischen 2 und 15 µm haben.

3. Akkumulator nach Anspruch 2,
**dadurch gekennzeichnet, dass** die Fasern der zweiten Lage eine Länge zwischen 5 mm und 40 mm haben.

4. Akkumulator nach einem der Ansprüche 1 bis 3,
**dadurch gekennzeichnet, dass** die flächenbezogene Masse der ersten Lage und die der zweiten Lage zwischen 15 und 80 g/m² liegt.

5. Akkumulator nach einem der Ansprüche 1 bis 4,
**dadurch gekennzeichnet, dass** die flächenbezogene Masse des Separators zwischen 30 und 100 g/m² liegt.

6. Akkumulator nach einem der Ansprüche 1 bis 5,
**dadurch gekennzeichnet, dass** die Stärke des Separators zwischen 80 um und 400 um liegt, wobei die Stärke der ersten Lage zwischen 20 und 80% der Stärke des Separators beträgt.

7. Akkumulator nach einem der vorhergehenden Ansprüche,
**dadurch gekennzeichnet, dass** der Separator durch ein Vinylmonomer veredelt ist.

8. Akkumulator nach Anspruch 7,
**dadurch gekennzeichnet, dass** das Vinylmonomer aus Acrylsäure und Metacrylsäure gewählt ist.

## Claims

1. A spirally wound storage cell having an alkaline electrolyte, the storage cell being in particular of the nickel-cadmium type or of the nickel metal hydride type, and including at least one positive electrode and at least one negative electrode on either side of a non-woven separator made up of fibers made exclusively of polypropylene, said storage cell being **characterized by** the fact that said separator comprises first and second superposed layers, said first layer being obtained by the "spun-bond" method and serving as a support, and said second layer being obtained by needling fibers on said first layer, the needling tangling the fibers of the second layer together, and bonding them to the fibers of the first layer.

2. A storage cell according to claim 1, **characterized by** the fact that each of the fibers in said first layer has a diameter lying in the range 10 µm to 20 µm, and each of the fibers in the second layer has a diameter lying in the range 2 µm to 15 µm.

3. A storage cell according to claim 2, **characterized by** the fact that each of the fibers in said second layer has a length lying in the range 5 mm to 40 mm.

4. A storage cell according to any one of claims 1 to 3, **characterized by** the fact that both the mass per unit area of said first layer and the mass per unit area of said second layer lie in the range 15 grams per square meter (g/m²) to 80 g/m².

5. A storage cell according to any one of claims 1 to 4, **characterized by** the fact that the mass per unit area of the separator lies in the range 30 g/m² to 100 g/m².

6. A storage cell according to any one of claims 1 to 5, **characterized by** the fact that the thickness of said separator lies in the range 80 µm to 400 µm, the thickness of said first layer lying in the range 20% of the thickness of the separator to 80% of the thickness of the separator.

7. A storage cell according to any preceding claim, **characterized by** the fact that said separator is grafted with a vinyl monomer.

8. A storage cell according to claim 7, **characterized by** the fact that said vinyl monomer is chosen from acrylic acid and methacrylic acid.
